# EUROPEAN PATENT SPECIFICATION

(11) **EP 3 366 464 B1**
(45) Date of publication and mention of the grant of the patent: **21.10.2020**
(21) Application number: 18158861.7
(22) Date of filing: 27.02.2018
(51) Int. Cl.: B31D 5/00, B01D 46/52

(54) **METHOD AND APPARATUS FOR TREATING PLEATED MATERIAL**
VERFAHREN UND VORRICHTUNG ZUR BEHANDLUNG VON PLISSIERTEM MATERIAL
PROCÉDÉ ET APPAREIL DE TRAITEMENT DE MATÉRIAU PLISSÉ

(30) Priority: 27.02.2017 SK 500232017 U
(43) Date of publication of application: 29.08.2018
(73) Proprietor: Cesko, Vladimír, 018 61 Belusa (SK)
(72) Inventor: Cesko, Vladimír, 018 61 Belusa (SK)
(74) Representative: Porubcan, Róbert

(56) References cited:
- US-A1- 2006 005 518

## Description

### Field of technology

The invention concerns a method of treating of the pleated material intended mainly for production of the air and fluid filters of various dimensions. New method and device (apparatus) allows to suitable machine treat and distribute individual folds of the pleated material during the insertion of the pleated semifinished product into the shaped holder in which the subsequent stages of treatment take place; for example, a flange or rim is attached to the pleated semifinished product.

### Prior state of the art

A technique of pleating is used for production of the shaped pleat to the air filters. Various known methods, devices and preparations are used for the purposes of pleating, which is a shape treatment of the cloth, paper or other material by means of folding into folds; the methods devices and preparations depend on the type, shape and dimensions of the pleat and also on the type, shape and dimensions of the resulting product. Various mechanical devices are used for the production of folds, which can be easily sequenced and therefore be part of the automatic production or montage line.

During the shape treatment of the pleat by pleating a shaped board can be used, which produces the folds on the pleated material on the basis of basic shape of this board, or which uses a bound kinematic movement of multiple machine parts. Publication NL7710199A discloses a system of gradual production of the pleat from the infinite paper strip by means of a semiautomatic device where individual folds of the pleat are produced by moving draw rods on which the plate boards are mounted, which in straightforward reverse movement enter into the contact with the paper strip and thereby produce a fold. Such solution is difficult to operate, produce and mount.

Solution according to US2006283162A1 discloses a method and device for production of the pleat by means of the rotational movement of two cylinders on which a chain is mounted, whereby the boards are attached to the chain on its circumference. The rotational movement of the chain causes the attached boards to gradually enter to the linearly moving paper strip, which produces folds. The disadvantage of such solution is its complexity and monofunctional use.

The rotational movement is used to produce pleat also in publications US2006005518A1 and US5389175A, where the rotating cylindrical screw with different pitches enters into linearly moving paper strip and gradually produces folds. Such solution is not universal enough and it is costly.

Publication ITVR950058A1 uses linear movement of the shaped boards to produce and shape the pleat; the boards are placed linearly on the piston and its linear movement produces individual folds on the pleat. This solution is easy to produce but difficult to operate and disadvantageous from the point of view of manipulation.

In order to produce individual folds, various forms and various shaped preparations are used. Publications according to DE4002078C1 and EP0438639A1 disclose a solution where the pleat is produced between two shaped boards moving reversally against each other. Technical solution US4547950A discloses a method of production of pleat and fixing of the gaps between individual pleat folds by means of insertion of a shaped boards. The disadvantage of such solution is their low universality, monofunctionality and costly production. Similar disadvantages can be seen in solution US5531892A, where the pleat is produced by means of a shaped lateral boards of the mould into which the basic material is inserted, and folds are produced by means of a closing of the mould by insertion of the shaped counterpart.

The basic shaped board can be used for shape treatment of the pleat, for example according to US5667545A, EP0948985B1, where the pleated material is evenly inserted and on the basis of this movement a desired folds in the pleat are produced. Such solution is very costly and difficult to produce, and it is significantly monofunctional.

The disadvantage of known technical solutions of the shaping of the pleat during the production of air or fluid filters is their costliness of production and installation, low universality of use for various shapes and applications, difficult operation, and absence of a possibility to adjust operation parameters. The production of pleat or shaping of the basic material, respectively, is usually part of the semiautomatic and/or automatic series production. Therefore such solution of the pleat shape treatment is desired which will allow effective shape treatment and distribution into already produced folds of the pleat; the change of the operation parameters; universal use for various dimensions; whereby such solution will not be costly, will be easy to produce, operate, mount and maintain.

### Essence of the invention

The abovementioned deficiencies are significantly remedied by the method of treatment of the pleated material according to claim 1 and the device for treatment of a pleated material according to claim 10. The method of treatment of the pleated material, which has a group of folds produced from the flexible or semiflexible basic material, where the folds are distributed into desired, usually even pitches which correspond to the pitches in the resulting product according to this invention which essence lies in the fact that the pleated material is firstly pressed in such a way that the neighboring folds adhere to each other, which basically removes the free gap between the folds, and then the pressed folds are led into contact with the set of the lamellas led in parallel which are oriented pursuant to the lines of the folds and which are firstly distributed in the pitches corresponding to the distances of the peaks of the pressed folds; the lamellas during their mutual relative movement between lamellas and pleated material are pressed into the pleated material between the peaks of the folds in such a way that they at least partially penetrate inside the pleated material and subsequently the lamellas are stretched into the pitches which correspond to the position of the folds in the resulting, final product.

The term pleat in this document denotes mainly, but not exclusively, a product from the flat material produced by the process of pleating, where the folds in a zigzag shape are produced from the flat material by folding.

The initial pressing of the pleated material has a function to remove the gap between the folds, which reliable produces an even pitch between the peaks of the folds. In this state the distance between peaks of the folds is approximately twice the thickness of the basic material. The thickness of the material is relatively even and so the peaks of the folds are in the pressed position distributed evenly even though the distance is now still different than the desired pitch. The fold of the material at the peak of the fold creates a different leading rounding; between the peaks of the folds there are evenly pitched, linear, shallow V-shaped grooves. The depth of these V-grooves corresponds approximately to the radius of the rounding on the peak of the fold, which corresponds approximately to the thickness of the material. This state allows the lamellas (or blades, or separating ledges) to enter between the folds; these lamellas are firstly pitched pursuant to the pitch of the pressed pleated material. The lamellas are oriented in parallel with the lines of the folds. V grooves serve precisely to correctly lead of the lamellas between the peaks of the folds. The lamellas in this first position A are withdrawn into identical pitches as the mutually distanced shallow V grooves of the pressed pleated material.

The pleated material is pressed before it is led into contact with the lamellas, whereby the pressing can be an initial step of the described method, or it can also be the last step of the preceding process, for example a process of production of the pleating or other treatment. In such case the pleated material arrives already pressed into the position in which it meets the set of lamellas.

The pleated material in a pressed state can be entered into the contact with the set of lamellas in such a way that the pleated material moves, approaches the lamellas and is put on the device with the set of lamellas; this entering into contact can also have a different course, where the device with the set of lamellas moves towards standing pleated material, or both objects can move, for example pursuant to the movement of the manipulator (pressed pleated material) or carousel (the device with the set of lamellas). What is essential is that the pressed pleated material reaches the necessary position against the set of lamellas.

The introduction of set of lamellas into contact with the pleated material forms a mutual movement in perpendicular direction onto the surface of the pleated material, which forms an overall plate of a pleated material and not individual folds. The plane with the pleated material and the plane with lamellas in this step approach each other. The subsequent movement of the lamellas from point A to point B takes place in the plane with the pleated material, or in the plane parallel with the pleated material, respectively.

At is stage it is impossible - also thanks to the pressing of the folds - that two lamellas enter a single gap or that no lamella enter into some intended gap, which is often a cause of a wrong insertion of the pleated material into the shaped holder according to the state of the art. The pressing reliably evens out the geometry of the pleated material. During the penetration of the lamellas into the pleated material the lamellas move between the peaks of the folds toward the opposite peak of the folds. It is preferable if the lamellas touch the opposite side of the opposite peak by its edge or at least part of its edge; then, after the changed of the pitch of the lamellas, the movement of the lamellas is reliably transferred through opposite peaks, which are hung by the inner side of their back on the upper edges of the lamellas. From the point of view of a simple manipulation it is preferrable if the spreading of the lamellas into the second position B is realized in the horizontal position, when the pleated material lies on the set of the lamellas, where the weight of the pleated material itself is sufficient to keep the shape connection between the opposite peaks and edges of the lamellas. In order to increase the stability of the process, the peaks of the pleated material can be mechanically or pneumatically pressed towards the upper edges of the lamellas, for example by the ledge with smooth surface or by the flow of the pressed air.

Usually the number of active lamellas, that is, lamellas which are in contact with the folds, will correspond to the number of gaps between the folds. In such case a single lamella will enter between each pair of folds. An arrangement is possible where the lamella enters only into each second, third, fourth or fifth shallow V groove. This ensures exact stretching of the pleated material between each three, four, five or six peaks. Inside this group of folds the regularity of the distribution will be ensured only by the identical strength of the folds and freedom of the folds between the ends of the group, where the accordion during the stretching of its ends stretches evenly. Such an approach, where the number of the shallow V groove is x-times less than the number of the active lamellas, simplifies the construction and guidance of the lamellas mailny in cases of tiny pleated materials with low thickness of the filter material, where a spatial problems could arise with regard to slidable guiding of the densely placed lamellas. Such approach can be preferably used mainly with the pleated materials with a lower height of the folds, where the pleated material behaves in a relatively stable way and during the stretching the sufficient regularity of the pitches of the folds between the two points of stretching is achieved.

The number of lamellas which enter between the neighboring peaks in such case corresponds to the fraction N/X, where N is a number of original gaps between the folds - that is, the number of shallow V grooves - and X is a whole number, preferably 2, 3, 4 or 5. The lamella is then present between each Xth neighboring pair of the folds. In a preferable arrangement during the processing of a suitable pleated material the number of lamellas in a middle part of the unit can decrease and the device is thus simplified. The main idea of this invention - where the lamellas are pressed into the pleated material in the pressed form, which is characterized by even distribution of the folds - is still used. The gap between the lamellas in the first A position is twice the thickness of the basic material in case the number of active lamellas corresponds to the number of the produced V grooves or corresponds to X-times the doulbe of the thickness of the material in case the lamella falls only to each Xth neighboring pair of the folds.

Since the lamellas always have a nonzero thickness and after the penetration into the pleated material the thickness of all active lamellas combined is added to the width of the pressed pleated material (the length is a dimension in the direction of the pressing), it is preferable if the pressing of the pleated material is released just before the penetration or during the penetration; preferably the pressing is released after the lamellas fall into the shallow V grooves which are produced by the rounded peaks of the neighboring folds in the pressed pleated material. Firstly, in the pressed state of the pleated material, the tips of the lamellas are led to the grooves between the peaks of the folds and during the further penetration of the lamellas into the folds the pressing is released.

After the insertion of the lamellas into the gaps between the folds the lamellas are mechanically spaced out into the desired pitch of the folds, that is, to second position B. The pitch in the position B corresponds to the pitch of the folds in the final product; usually the pitch will be even or the pitch in the second position B can be gradually changed or changed in leaps pursuant to the design of the final product; for example, on one pkane it can have even pitch b1 and on a rest of the plane even pitch b2. The movement of the lamellas between the positions A and B can be even, where all the lamellas, or all the active lamellas, respectively, are stretched at the same time; or the lamellas can be stretched gradually one after another. The choice will be affect mainly by the construction of the attachment and the guiding of the lamellas.

The entering of the lamellas into the pleated material can be arranged pursuant to various designs, usually affected by the surrounding technology. It can be ensured manually or by means of a manipulator. The lamellas can enter the pleated material at the same time on the whole ground plane or gradually alongside the wave. For example, firstly the middle part of the pleated material is pressed between the lamellas and then, after the insertion and pressing, it proceeds towards both sides from the middle part. Pursuant to the chosen course the relative pressure will evolve between the lamellas and the pleated material, which ensures the mutual movement between the pleated material and the lamellas.

After the stretching of the lamellas into position B the pleated material can be moved to the shaped holder or it is processed directly in the device with the movable lamellas. In this subsequent phase the folds in the second position B are fixed at least on one lateral wall of the pleated material; usually they are fixed in such a way that the folds on the lateral wall of the pleated material are connected by the stabilizing element, for example in the form of a tape or a profile, which is glued to the lateral wall of the pleated material, which connects the outer edges of the folds in the respective position. If a lateral sliding force is produced during the gluing, then another advantage of the described method is demonstrated, where the lamellas keep a stable pitch and prevent the folds from deforming. After the removal of the pleated material from the device with the set of lamellas the lamellas are moved back to the first position A.

The essential feature of the proposed invention is therefore a making use of the even distribution of the peaks of the folds in the pressed state of the pleated material. This is used for a reliable insertion of the appropriately distributed lamellas. The method allows quick and reliable placement of the folds into the desired position, thank to which the process can be automatized. The method according to this invention brings another advantage in that the second position B does not have to present an even distribution of the folds. Until now the designing of the filter elements have been determined by the technological limitations in form of an even distribution of the folds, in the case of the method according to this invention the filter material pursuant to the course of flow in individual zones of the filter element can be better used. This leads to the saving of costs and increase of the filter capacity of the resulting product.

The deficiencies in the state of the art are significantly remedied by the device for the treatment of the pleated material, too, which includes a base plate with the set of the parallel lamellas which are designed to fall between the folds in the pleated material according to this invention which essence lies in the fact that the lamellas are placed on the bas plate slidably in order to achieve two positions A, B with different pitches of a, b lamellas. The kinematics of the movable placement ensures the increase and decrease in the pitch of the lamellas, whereby these move in a single plane which is parallel with the base plate. The lamellas usually move straighforwardly pursuant to the used construction of the movable guiding. The lamellas are always parallel in position A and usually will be parallel in position B, too, which corresponds to the parallel course of the folds in the pleated materials in the pressed state. The filter elements according to the state of the art are commonly characterized by the paralle course of the folds in the position B. Such course can be more easily ensured in the production, but the proposed invention eschews this limitation, too, which can be used in the more effective design of the filter elements.

The mechanism for moving of the lamellas ensures the change of the first position A to the second position B an back. The lamellas in first position A have a gap between them, whereby the gap is twice the thickness of the basic material or is X-times the double of the thickness of the basic material, where X is a whole number, preferably 2, 3, 4 or 5. The gap between the lamellas in the first position A, that means, the pitch of the lamellas reduced by the thickness of the lamella, allows for insertion of the folds forming one peak between the neighboring lamellas, or N pairs of lamellas fits between the neighboring lamellas. Pursuant to the type of the processed pleated material a number of lamellas in the middle part can be lowered, which allows for simpler construction of the device. In such case the number of lamellas is identical to the number of the gaps between the folds.

The movable placement of the lamellas will usually allow a change of the pitch on a broad scale so that the device can be adapted and set for varying thicknesses of the basic material and also for various pitches b in the second position B. The number of lamellas in the device can be set by the final product with the larger number of gaps within a single production programme. Only the necessary number of lamellas is then active in the contact; others can also withdraw or stretch, or they are removed from the movable guiding.

The lamellas can be mutually mechanically connected by means of the various elements with various kinmatic bond, or they can be controlled nad moved independently, which allows to flexibly alter the control of the lamellas pursuant to the needs of the actually processed final product.

In order to achieve the attachment of the pleated material on the uppr edges of the lamellas, the lamellas will have height corresponding at least to the heigh of the fold in the resulting product; preferably they will have a height surpassing the height of the fold in the pressed state of the pleated material. The the inner back of the opposite peak is leaned or placed on the upper edge of the lamella, which forms a preferable shape contect during the drift or carrying of the folds.

Any construction which allows to place lamellas densely and in parallel one after each other, and allows for the change of their pitch, can be used for the movable guiding of the lamellas; preferably it should allow a continuous, gradual change of the pitch.

In the preferrable arrangement the lamellas will be formed by the flat little plate (or disc) which will have on the lower edge at least one elemnt for connection with the movable guiding in the basic plate and on the upper had it has a rounding and/or stricture (narrowing link) into the tip. Such rounding or stricture into the tip better falls into the shallow V groove. The thickness of the lamella will usually not surpass 3 mm, preferably it is less than 2 mm. The maximal thickness of the lamella will be determined by the thickness of the fold, that is, approximately, by the double of the thickness of the flat semifinished product from which the pleated material is produced. The lamellas can be produced as divided where one lamella is formed by multiple elements lined up into the line of a lamella. The elements can have a form of little plates, discs, protrusions or needles or they can include the combinations of such elements. It is important that the elements are lined up into a line and are capable of penetrating the pressed folds of the pleated material. The length of the upper edge of the lamella or, in the case of the divided lamella, respectively, the length of the group of the little plates forming one line entering into one pleated fold, should be at least a third of the transverse dimension of the pleated material, that is at least a third of the length of the back of the peak. In case the device will not serve to hold the pleated material during the gluing of the stabilizing element, mainly a lateral tape, the lateral sides of the pleated material do not have to be freely available and the length of the lamellas can be longer than the transversal dimension of the pleted material, thanks to which the device can be used for a broad dimensional scale of the final products. In such case the device is used only for production of the desired even pitches and such distributed pleted material is moved to a mold or a similar preparation in which the folds are kept in the desired position and the lateral sides or, eventually, surfaces on the circumference of the pleated material are available for treatment.

Two basic construction options of the guiding and moving of the lamellas are disclosed in the examples.

First movable placement is produced by the system with the chain with the identical length of the links. The studs of the links are on one side of the chain led in the first groove in the base plate. Such guiding of the studs in the first groove during the stretching of the ends of the chain causes that even when they are only ends of the chain which are stretched, the other links are stretched evenly, too. The studs on the other part of the chain are moving in the second groove with a gap, whereby they are laterally led in the slotted link which allows a common lateral movement of all studs of the links on a single side of the chain. The position of the studs is kinematically determined by the position of the two opposite studs which are led by the first groove. The stud of the chain forms a point of connection for the lamellas; the lamellas can have pins which fall into the studs in the links. The usage of two chains carried (driven) by a common propulsion produces a set of two pairs of guidances for each lamella.

Since the lamellas are held in the studs in the second groove they move not only in the directio of the change of the pitch, but they also extend and withdraw in the lateral direction, the set of lamellas can be produced on the base plate in such a way that the lamella is produced by two mutually independently led parts in a single line; the first part of the lamella and the second part of the lamella are connected by a mechanism (8) into the common movement during the change of the pitch. Thanks to this the two parts of a lamella which are placed in the studs of the second groove with a gap move in the lateral direction mutually in opposite way which eliminates an influence of the lateral sliding of the lamellas on the pleated material.

The mechanism of the positioning can in a simple and reliable arrangement include at least one screw gear which propels at least one driver connected to the ends of the chains. A screw with the opposite pitch thread on the ends which propel the opposite movement of two drivers can be used, too. The drivers are connected with the opposite ends of the chain. The rotation of the screw and the exact reaching of the necessary position then suffices to use the directed electromotor, for example small small stepper electrcomotor with flange gearbox. Preferably, two coupled screws or mulitple coupled screws can be used. When two screws are used, these are placed on the sides of the mechanism in such a way that each moves the guiding of the lamellas in one side. The coupled rotation of the screws achieves an even and identical movement of both ends of the lamellas and prevents the jamming of the slidable guidings during higher speeds of movement.

In another arrangement the lamellas can be led by movable ledges which are placed in the bas plate perpendicularly on the orientation of the lamellas. The lamellas are on the lower side attached in two movable ledges. The mechanism for positioning can pull the first movable ledge and this one subsequently after the reaching of the set pitch b (corresponding to the second position B) will pull the second movable ledge by means of a pin or a rope and this achieves the movement of the last movable ledge with the lamella, too. The construction arrangement of the device corresponds to these movements.

Obviously, other arrangements for movable guiding and other arrangements of the mechanism for the change of the pitch are possible, too. The advantage of the proposed invention is its easy arrangement; all main movements are realized in two basic planes - parallel to the surface of the pleated material and perpendicular onto the surface of the pleated material. The pleated material is pressed by the movement in a single direction in the plane of the pleated material, whereby the folds are pressed to each other. Such movement is led perpendicularly onto the bend lines (curves) of the folds. In a plane parallel with the pleated material the lamellas are pressed into the position A. The the lamellas move perpendicularly onto the surface of the pleated material and after the penetration between the folds the lamellas move in the plane of the pleated material to the position B.

The advantage of the proposed invention is the simple method of the adjustment leading to the desired distribution of the folds of the pleated material, which significantly limits the share of the manual work, incerases the precision of the production in subsequent operation, which leads to higher efficacy of the produciton, elimination of waste and saving of the manipulation costs. The device for treatment of the pleated material into the desired position of the folds is very simple, reliable and can be effectively used for production of various filters. The device can also be used as a mold, shape preparation, which serves as a stabilizing holder during the production operation, for example during the taping of the edges. The method and device according to this invention can be used for various shapes, sizes, amounts and realizations of the produced pleated materials.

### Description of draslotted links

The invention is further disclosed by draslotted links 1 to 12. The used scale of the depiction, the number of depicted folds and lamellas as well as the ratio of sizes of individual elements does not have to correspond to the description in the examples and these scales and ratios of sizes cannot be interpreted as limiting the scope of protection. The particular shape of the depicted pleated material and the shape of the resulting product in the form of the air filter is illustrative only, too.

Figure 1 depicts an example of the air filter which is comprised of pleated material cut into the desired groundplan where the lateral edges of the pleated material are taped by the stabilizing element in form of a tape.

The figure 2 depicts a pleated material cut and intended for further processing. Figure 3 is a detail of two folds.
Figure 4 is a pleated material depicted as pressed into the position before entering into the contact with the lamellas. Figure 5 is a detail of adherence of two folds and production of shallow V groove.
Figure 6 depicts the contact of the lamellas with the pressed pleated material.
Figure 7 depicts lamellas penetrating into the pleated material, where lamellas fall into each gap.
Figure 8 is a pleated material in the second position B, which corresponds by its pitch b to the distribution in the final product.
Figure 9 depicts lamellas entering the pleated material in such a way that lamellas fall into each third gap. Figure 10 then depicts this pleated material in the second position B.
Figure 11 depicts a simplified kinematic scheme of the guiding and positioning of the lamellas by means of a chain.
Figure 12 depicts the simplified kinematic scheme of the guiding of the lamellas by means of the slidable ledges.

### Examples of realization of the invention

### Example 1

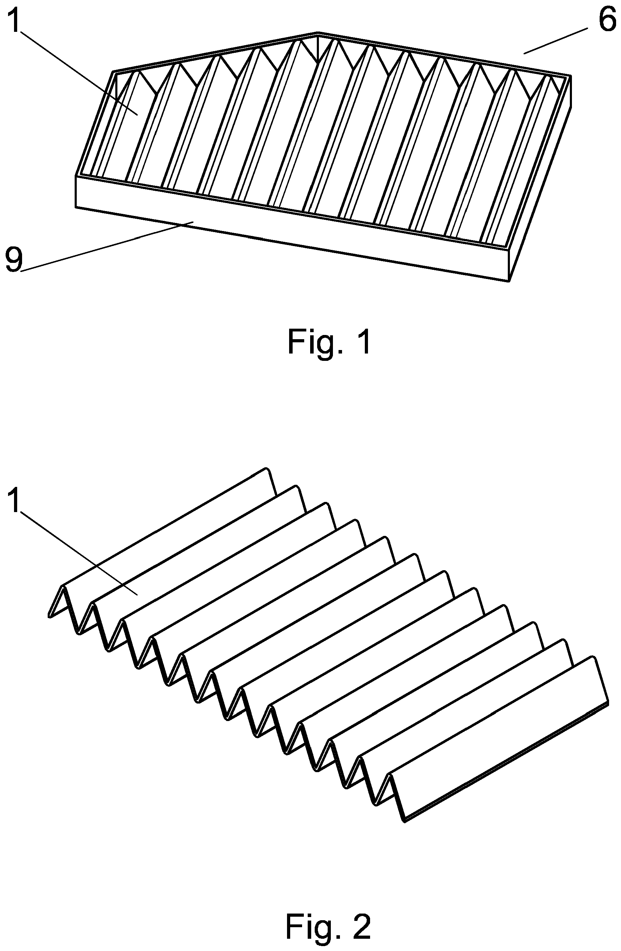

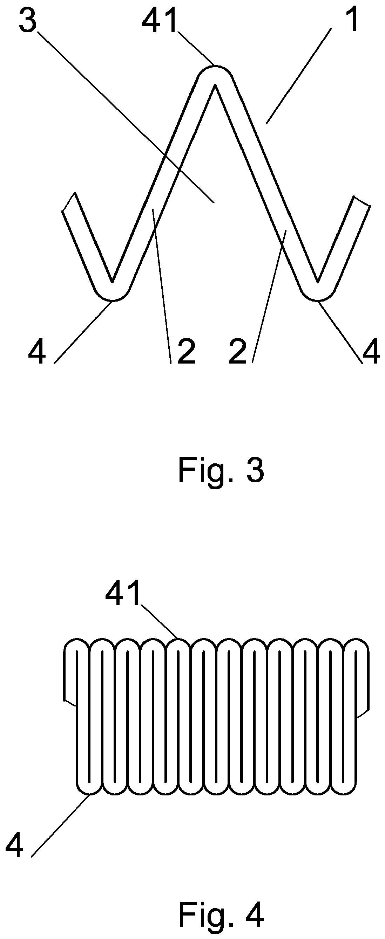

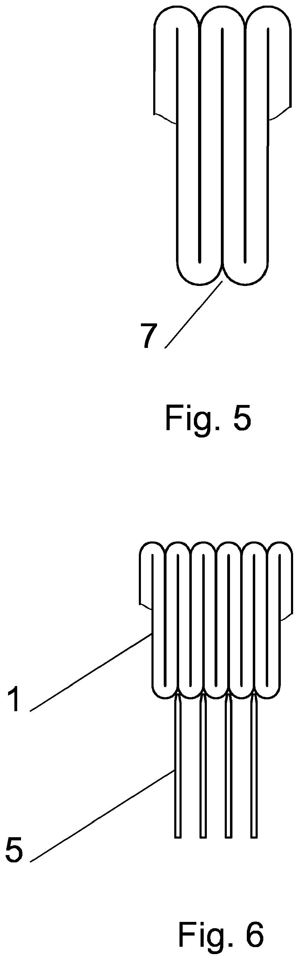

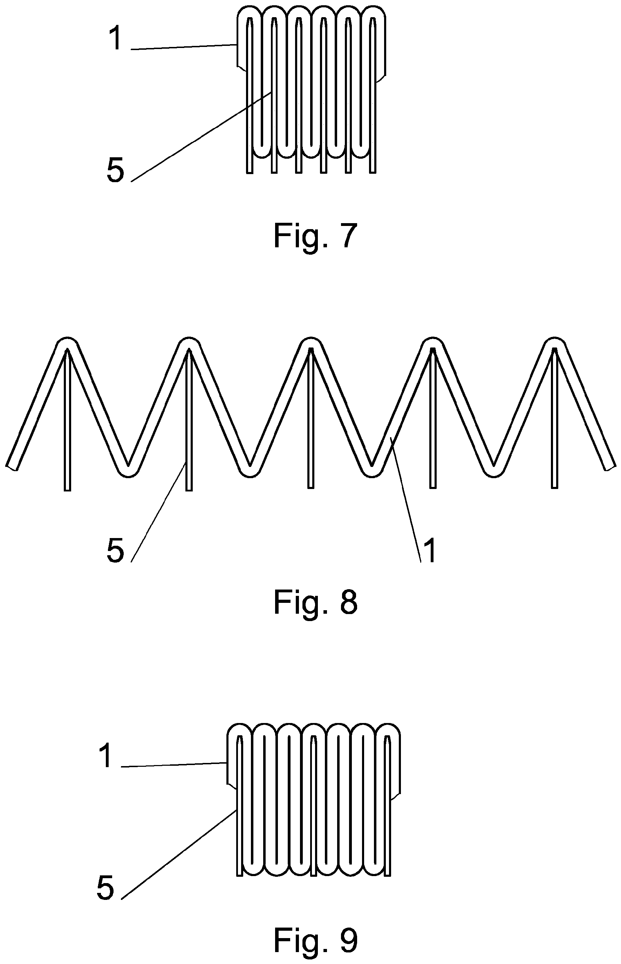

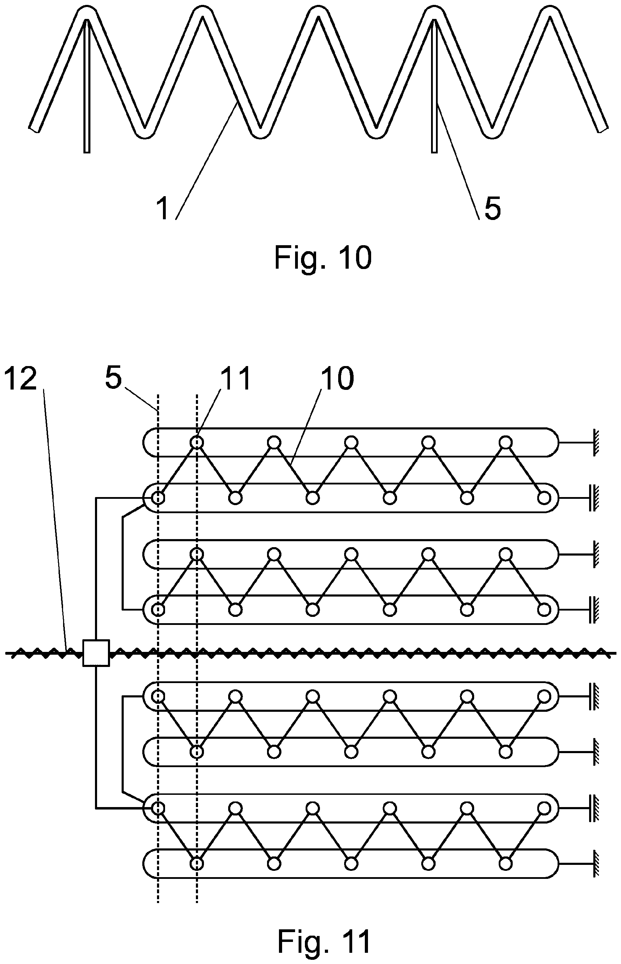

The device for shape treatment of the pleat in this example according to figures 1 to 11 has movable lamellas 5 which are mounted into chains 10. These linearly slide, stretch or withdraw in the plane of the base plate 9 by means of a gear, the rotational movement of the threaded rod for the linear movement of two movement drivers. The device in this example has a metal base plate 9, the central console with the bearing house is attached to the body of the base plate 9 in its axis; the threaded rod with two symmetrical drivers is rotationally placed in the bearing house in such a way that the drivers allow for rotational movement of the threaded rod and at the same time allow for the linear movement of the two shape-adjusted drivers below the level of the chains 10. The chains 10 are led with their studs 11 in a solid groove of the base plate 9 and in the groove of the movable slotted link. Each from the two pairs of chains consists of series of links and studs on which the lamellas 5 are attached.

The base plate 9 has a central console and around the circumference of the base plate 9 two longitudinal and two transversal ledges are attached by screws. In the axis of the central console a central bearing house is fixedly attached and the threaded rod is rotationally placed int the bearing house, whereby one end of the rod is rotationally placed in the non-transitory bearing house and its second end is rotationally placed in the transitory bearing house and these are attached in the base plate 9. The threaded rod is divided into two parts on which the threads with the opposite direction of the lead of the thread. The bearing houses with the inner thread corresponding to the direction of the lead of the thread of the respective part of the threaded rod are placed into both sides of the threaded rod. The bearing houses are thus rotationally attached to the threaded rod and at the same time fixedly connected with the shaped flat drivers. The threaded rod with the bearing houses and the shape drivers forms a basic movement mechanism 8 of the device. The rotational movement of the thread rod leads to linear movement of the shaped drivers which pursuant to the direction of the rotation of the threaded rod and pursuant to the opposite direction of the lead of the threads on the threaded rod either approach the threaded rod or withdraw from it.

The view plane of the basic movement mechanism 8 is closed by static and moving slotted links. The static and moving slotted links are flat metal parts with the longitudinal grooves for guiding of the bearings with rotational studs 11 into which the lamellas 5 are mounted. The static slotted links are fixedly attached to the base plate 9 on its circumference. The studs 11 with the bearings are during the linear movement of the drivers also linearly moving in the grooves of the static slotted links which width corresponds to the width of the studs 11. The movable slotted links also have grooves for guidance of the bearings with the rotational studs 11. The movable slotted links are on both sides of the base plate 9 mounted in the leads through which the slotted links move perpendicularly onto the direction of the movement of the drivers. The leads of the movable slotted links in form of the metal pins are fixedly mounted in the base plate 9.

Thanks to the grooves in the static and movable slotted links the device produces a system of grooves for leading the bearings with the rotational studs 11 in such a way that the movable mechanism 8 transfers the linear movement of the shape drivers onto the accordion movement of the chains 10 while the even distance between the axes of the studs 11 on the individual links is maintained. Each chain 10 is produced by rotational connection of the links with the bearings and the rotational studs 11 in such a way that two bearings with the rotational studs 11, placed in the openings on both ends of the slotted links, correspond to each link, and at the same time individual following links are connected with a single bearing and the rotational stud 11. The chain 10 is on both ends connected to the drivers. The number of links in the chain 10 depends mainly on the desired number of lamellas 5. During the linear movement of the drivers a translation movement of the bearings with the rotational studs 11 takes place, whereby the bearings are led in the grooves of the static slotted links, and at the same time the transversal movement of the bearings with the rotational studs 11 takes place, whereby the bearings are led in the leads. The whole set of the chain therefore realizes an "accordion-like" movement. The remaining bearings with the rotational studs 11 of the chain 10 are led in the grooves of the respective static or movable slotted link.

The chains 10 are thus movable, they stretch and withdraw pursuant to the direction of the rotation of the threaded rod. The maximal grip is defined by the dimensions of the studs 11 or links. The movement of individual chains 10 also moves the lamellas 5 mounted in the studs 11.

The movement of the lamellas 5 shape-adjusts the insterted pleated material 1; the folds 2 are distributed according to the required pitch.

In this example the resulting product 6 has evenly distributed folds 2, which is cause by kinematic bond of the chain 10.

### Example 2

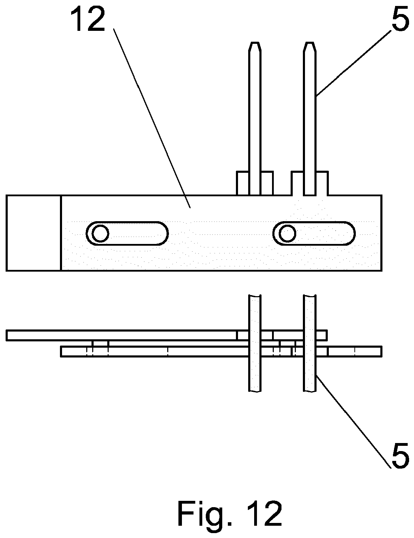

In this example according to figures 1 to 10 and 12 the device has base plate 9 in which the guiding ledges 12 are movably led. One pair of guiding ledges 12 corresponds to each lamella 5. The guiding ledges 12 are in two groups placed in the grooves on the edges of the base plate 9, whereby the neighboring guiding ledges 12 in a single group mutually touch each other. A single groove in the base plate 9 thus on a relatively small surface produces a lateral guiding for a whole group of guiding ledges 12 which are at the same time oriented perpendicularly on the surface of the base plate 9. With the small thickness of the guiding ledges 12 it is possible to guide large amount of guiding ledges 12 and thereby place a sufficient amount of lamellas 5.

In order to prevent the guiding ledges 12 from falling out of the groove in the base plate 9, each guiding ledge 12 has two longitudinal openings into which the driving pins fall. The longitudinal openings have a length which allows for a movement of the lamella 5 in the required scope.

The guiding ledges 12 in this example are produced by cutting from the plastic plate which simplifies the production and makes it cheaper. Thanks to this the guiding ledges 12 in this example are made to measure for the desired pitches a, b in the position A, B in such a way that guiding ledges 12 have a shape stops for delimitation of the pitch a, and they have openings for the pins on the neighboring guiding ledge 12 where the gap of the pin in the opening defines the pitch b.

The upward oriented holder of the lamella 5 is produced on the guiding ledge 12; the lamella 5 is pushed into the holder. In the holder the lamella 5 is gripped by spring load. The holder is composed of two protruding fingers between which the gap is smaller than the thickness of the lamella 5, whereby the thickness of the fingers is defined by the gap between lamellas in the first A position. The movement of the outermost lamella 5 gradually moves the subsequent lamellas 5 into the second position B.

The principle of the insertion of the pleated material 1 into the system of lamellas 5 is identical to the example 1. The pressing of the pleated material 1 removews the gap 3 between the folds 2, and peaks 4 produce the guiding zone with the V groove 7. The lamella 5 penetrates to the vicinity of the opposing peak 41.

### Example 3

The lamella 5 is designed to penetrate into the space between two folds 2 and it is composed of the first part 51 and second part 52. Both these parts are identical; they are metal flat little plates (discs) skewed in the upper part.

### Example 4

Lamella 5 is slidably placed on the base plate 9. The mechanism 8 for movement of the lamellas 5 involves two ropes (cords) on which the drivers connected with lamellas 5 are distributed in the necessary pitches. Tensioning of the rope gets drivers into the desired pitch which can be uneven, too, pursuante to the design of the final product 6.

### Example 5

In this example the mechanism 8 for movement of the lamellas 5 involves two combs whose teeth define the positions A, B. The comb is pressed into the studs in the lower part of the lamellas 5. The toothed comb is moved under the slotted link in the direction of the course of the wave.

### Example 6

Lamellas 5 have a pair of studs on the sides, from both sides of the slotted link. The vertical converging grooves in the wongs form a guidance (guiding), where during the relative vertical movement of the parts of the unit the studs of the lamellas 5 led in the grooves ensure the movement of lamellas 5 from position A to position B and vice versa.

### Example 7

Each lamella 5 in this example has an independent propulsion and sensor of its actual position. Each lamella 5 can thus be positioned independently and thereby an unvene pitch of the folds 2 can be produced, too. The programme in the control computer is used to control the position of the lamellas 5. Pursuant to the thickness of the pleated material 1 the position A is set; pursuant to the desired pitch of the individual folds 2 in the final product the position B is set.

### Industrial applicability

The industrial applicability of the invention is obvious. According to this invention it is possible to industrially and repeatedly produce and use a device for treatment of the pleated material, mainly during production and treatment of filters.

### List of related symbols

1 - pleated material
2 - fold
3 - gap
4 - peak
   41 - opposite peak
5 - lamella
   51 - firs part of the lamella
   52 - second part of the lamella
6 - final product
7- groove
8 - mechanism
9 - base plate
10 - chain
11 - stud
12 - guiding ledge

## Claims

1. A method of a treatment of a pleated material, where the pleated material (1) produced from a flexible or semi-flexible basic material includes a group of folds (2) with gaps (3) and peaks (4), where the folds (2) are distributed to pitches which correspond to the pitches in a final product (6)
is **characterized by the fact**, that
the pleated material (1) in a state where it is in one direction pressed in such a way that the neighboring folds (2) are attached to each other without the free gap (3) between the folds (2) is entered into a contact with a system of lamellas (5) led in parallel which are oriented in accordance with the folds (2),
whereby the lamellas are first in a first position (A) distributed in pitches (a) corresponding to distances between the peaks (4) and the pressed folds (2),
during the relative movement between the lamellas (5) and the pleated material (1) the lamellas (5) penetrate into the pleated material (1) between the peaks (4) of the folds (2) in such a way that they at least partially reach inside the pleated material (1),
and subsequently the lamellas (5) are stretched into a second position (B), whereby they carry the folds (2) into pitches (b) which correspond to the pitches in the final product (6).

2. method of the treatment of the pleated material according to the claim 1 i s **characterized by the fact**, that the pleated material (1) is pressed in one direction in order to remove the free gap (3) between the folds (2) in a first phase of the treatment of the pleated material (1) or in a last phase of a preceding process of a production of the pleated material (1) after which the pleated material (1) is kept in a pressed state, whereby the lamellas (5) in the second position (B) are evenly distributed or the lamellas (5) in the second position (B) are distributed by a different pitch in various zones of the pleated material (1).

3. The method of the treatment of the pleated material according to the claim 1 or 2 **is characterized by the fact**, that during the penetration of the lamellas (5) into the pleated material (1) the lamellas move their peaks (4) to an opposite peak (41); preferably the lamellas (5) by its edge or at least part of its edge touch an inner side of of the opposite peak (41).

4. The method of the treatment of the pleated material according to any of the claims 1 to 3 **is characterized by the fact**, that the number of the lamellas (5) which penetrate between the neighboring peaks (4) corresponds to the number of the original gaps (3) between the folds (2); or the number lamellas (5) which penetrate between the neighboring peaks (4) corresponds to a fraction N/X where N is the number of the original gaps (3) between the folds (2) and X is a whole number, preferably 2 or 3 or 4 or 5, whereby the lamella (5) during the contact with the pleated material (1) and during the subsequent penetration into it is between each X-th neighboring pair of the folds (2).

5. The method of the treatment of the pleated material according to any of the claims 1 to 4 **is characterized by the fact**, that the pressing of the pleated material (1) is released during the penetration of the lamellas (5); preferably it is released once the lamellas (5) fall into grooves (7) which are produced by the rounded peaks (4) of the neighboring folds (2) in the pressed state of the pleated material (1).

6. The method of the treatment of the pleated material according to any of the claims 1 to 5 **is characterized by the fact**, that the gap between the lamellas (5) in the first position (A) is twice the thickness of the basic material or X-time the double of the thickness of the basic material in case the lamella (5) falls into each X-th neighboring pair of the folds (2) only.

7. The method of the treatment of the pleated material according to any of the claims 1 to 6 **is characterized by the fact**, that the lamellas (5) stretch evenly and at a same time during a transition from the first position (A) to the second position (B) or the lamellas (5) stretch gradually one after another during the transition from the first position (A) to the second position (B).

8. The method of the treatment of the pleated material according to any of the claims 1 to 7 **is characterized by the fact**, that the lamellas (5) penetrate into the pleated material (1) gradually; firstly a middle part of the pleated material (1) is inserted between the lamellas (5) and then the insertion continues towards both sides of the middle part.

9. The method of the treatment of the pleated material according to any of the claims 1 to 8 **is characterized by the fact,** that the folds (2) in the second position (B) are fixed at least on one lateral wall of the pleated material (1); preferably the folds (2) in the second position (B) are connected on the lateral side of the pleated material (1) by a stabilizing element in form of a tape or a profile which is guled to the lateral side of the pleated material (1).

10. A device for a treatment of a pleated material which includes a base plate (9) with a system of parallel lamellas (5) which are intended to fall between folds (2) of the pleated material **is characterized by the fact**, that
the lamellas (5) are placed movably on the base plate (9) in order to achieve two positions (A, B) with different pitches (a, b) of the lamellas (5),
in both positions (A, B) the lamellas (5) are parallel,
the device includes a mechanism (8) for movement of the lamellas (5) between the first position (A) and the second position (B),
where the second position (B) of the lamellas (5) corresponds to a position of the folds (2) of the pleated material (1) in a final product (6).

11. The device for the treatment of the pleated material according to the claim 10 **is characterized by the fact**, that the lamella (5) is formed by a flat little plate which has on its lower part at least one element for a connection with a movable guiding in the base plate (9) and on the upper part it has a rounding and/or stricture into a tip, and the lamella's (5) thickness is up to 3 mm, preferably up to 2 mm.

12. The device for the treatment of the pleated material according to the claim 10 or 11 **is characterized by the fact**, that the lamellas (5) are led in studs (11) of a chain (10) which is placed in grooves in the base plate (9), whereby the lamellas (5) are removable from the studs (11) of the chain (10); or the lamellas (5) are led in guiding ledges (12), which are slidably placed in the base plate (9).

13. The device for the treatment of the pleated material according to any of the claims 10 to 12 **is characterized by the fact**, that the mechanism (8) includes a screw gear which drives at least one driver connected with the lamellas (5) and/or with the chain (10); preferably the screw gear has a threaded rod on which threads have a different lead on each side.

14. The device for the treatment of the pleated material according to any of the claims 10 to 13 **is characterized by the fact**, that the lamella (5) is formed by two independently led parts (51, 52) in a first line; the first part (51) of the lamella (5) and the second part (52) of the lamella are connected by the mechanism (8) into a common movement during a change of the pitch.

## Patentansprüche

1. Eine Verfahren zur Behandlung von plissiertem Material, wo der aus dem elastischen oder halbstarren Grundwerkstoff erzeugte Plisseestoff (1) beinhaltet die Faltengruppe (2) mit Lücken (3) und Hochpunkten (4), wobei die Falten (2) sich in die Abstände verteilen, die den Abständen im Endprodukt (6) entsprechen, **dadurch gekennzeichnet, dass**
der Plisseestoff (1) wird im Zustand, wo er sich in einer Richtung so gepresst befindet, dass die benachbarten Falten (2) ohne Lücke (3) aneinander gepresst stehen, in Verbindung mit dem System von parallel geführten Lamellen (5) versetzt, die mit Übereinstimmung mit den Falten (2) orientiert sind,
wobei die Lamellen zuerst in erster Stellung (A) in den Abständen (a) verteilt sind, wobei die Abstände den Distanzen von Hochpunkten (4) den gepressten Falten (2) entsprechen,
bei gegenseitiger relativer Bewegung der Lamellen (5) und dem Plisseestoff (1) dringen ein die Lamellen (5) in den Plisseestoff (1) unter Hochpunkten (4) der Falten (2) so, dass sie wenigstens teilweise im Inneren des Plisseestoffs (1) durchgreifen,
anschließend werden die Lamellen (5) in die zweite Stellung (B) ausgezogen, wobei die Falten (2) in die Abstände (b) mitgenommen werden, die den Abständen im Endprodukt (6) entsprechen.

2. Die Verfahren zur Behandlung von plissiertem Material nach Anspruch 1, **dadurch gekennzeichnet, dass** der Plisseestoff (1) in einer Richtung zur Beseitigung der freien Lücke (3) unter Falten (2) gepresst wird und zwar in erster Phase der Behandlung von plissiertem Material oder in letzter Phase vom vorherigen Prozess der Herstellung des Plisseestoffs (1), nach deren der Plisseestoff (1) im zusammengedruckten Zustand gehalten wird, wobei die Lamellen (5) in der zweiten Position (B) mit gleichmäßigem Abstand verteilt sind oder die Lamellen (5) in der zweiten Position (B) mit unterschiedlichem Abstand in den verschiedenen Zonen des Plisseestoffs (1) verteilt sind.

3. Die Verfahren zur Behandlung von plissiertem Material nach beliebigem Anspruch 1 oder 2 **dadurch gekennzeichnet, dass** es beim Durchgriff der Lamellen (5) im Plisseestoff (1) die Lamellen (5) zwischen den Hochpunkten (4) bis zum gegenüber stehenden Hochpunkt (41) geschoben werden, vorteilhaft, wenn sich die Lamellen (5) mit ihrem Rand oder wenigstens mit ihrem Randteil die Innenseite des gegenüber liegenden Hochpunktes (41) berühren.

4. Die Verfahren zur Behandlung von plissiertem Material nach beliebigem Anspruch 1 bis 3 **dadurch gekennzeichnet, dass** die Zahl der Lamellen (5), die zwischen nebeneinander stehende Hochpunkte (4) durchdringen, entspricht der Zahl der ursprünglichen Lücken (3) zwischen den Falten (2) oder die Zahl der Lamellen (5), die zwischen nebeneinander stehende Hochpunkte (4) durchdringen, entspricht der Bruchzahl N/X, wo N die Zahl der ursprünglichen Lücken (3) unter den Falten (2) ist, und X eine ganze Zahl ist, vorteilhaft 2 oder 3 oder 4 oder 5 ist, wobei die Lamelle (5) bei Berührung mit dem Plissee-Stoff (1) und beim folgenden Durchdringen in diesen sich zwischen jedem X-ten Paar der Falten (2) befindet.

5. Die Verfahren zur Behandlung von plissiertem Material nach beliebigem Anspruch 1 bis 4 **dadurch gekennzeichnet, dass** die Pressung des Plissee-Stoffs (1) beim Durchdringen der Lamellen (5) gelöst wird, vorteilhaft wird gelöst nach dem Einrasten der Lamellen (5) in den Nuten (7), die gebildet durch abgerundeten Hochpunkten (4) der benachbarten Falten (2) im zusammengepressten Zustand des Plissee-Stoffs (1) werden.

6. Die Verfahren zur Behandlung von plissiertem Material nach beliebigem Anspruch 1 bis 5 **dadurch gekennzeichnet, dass** die Lücke zwischen Lamellen (5) in ersten Position (A) der zweifachen Dicke des Grundstoffs oder X-mal der zweifachen Dicke des Grundstoffs entspricht und zwar falls die Lamelle (5) nur in einer X-ten benachbarten Paar der Falten (2) einrastet.

7. Die Verfahren zur Behandlung von plissiertem Material nach beliebigem Anspruch 1 bis 6 **dadurch gekennzeichnet, dass** die Lamellen (5) sich beim Übergang von der ersten Position (A) in die zweite Position (B) gleichmäßig zugleich ausziehen oder die Lamellen (5) sich beim Übergang von der ersten Position (A) in die zweite Position (B) nacheinander der Reihe nach ausziehen.

8. Die Verfahren zur Behandlung von plissiertem Material nach beliebigem Anspruch 1 bis 7 **dadurch gekennzeichnet, dass** die Lamellen (5) im Plissee-Stoff (1) nach und nach durchgreifen, wo es vorerst zwischen die Lamellen (5) der Mittelteil des Plissee-Stoffs (1) hineingelegt wird und hernach wird es mit der Einlegung ab dem Mittelteil in Richtung nach beide Seiten fortgesetzt.

9. Die Verfahren zur Behandlung von plissiertem Material nach beliebigem Anspruch 1 bis 8 **dadurch gekennzeichnet, dass** die Falten (2) in der zweiten Position (B) wenigstens an einer Seitenwand des Plissee-Stoffs (1) fixiert werden, von Vorteil ist, wenn die Falten (2) in der zweiten Position an der Nebenwand des Plissee-Stoffs (1) mit einem stabilisierenden Element in Form vom an der Nebenwand des Plisseestoffs (1) anzuklebenden Band oder Profil verbunden werden.

10. Eine Vorrichtung zur Behandlung von plissiertem Material, die eine Grundplatte (9) mit dem System der zum Einrasten zwischen Falten (2) des Plissee-Stoffs (1) bestimmten parallelen Lamellen (5) enthält, **dadurch gekennzeichnet, dass** die Lamellen (5) zum Erreichen zwei Positionen (A, B) mit unterschiedlichen Abständen (a, b) der Lamellen (5) auf der Grundplatte beweglich aufgesetzt sind,
in beider Positionen (A, B) die Lamellen (5) parallel liegen,
die Einrichtung einen Mechanismus (8) zur Bewegung der Lamellen (5) zwischen der ersten (A) und zweiten Position (B) enthält,
wo die zweite Position (B) von Lamellen (5) der Position der Falten (2) des Plissee-Stoffes (1) im Endprodukt (6) entspricht.

11. Die Vorrichtung zur Behandlung von plissiertem Material nach Anspruch 10 **dadurch gekennzeichnet, dass** die Lamelle (5) durch ein flaches Plättchen gebildet wird, das an der unteren Kante wenigstens ein Element zur Verbindung mit der verschiebbaren Führung auf der Grundplatte (9) besitzt und dessen obere Kante abgerundet und/oder zur Spitze eingeengt ist und die Dicke der Lamelle (5) bis zu 3 mm, vorteilhaft bis zu 2 mm beträgt.

12. Die Vorrichtung zur Behandlung von plissiertem Material nach beliebigem Anspruch 10 oder 11 **dadurch gekennzeichnet, dass** die Lamellen (5) durch Bolzen (11) der Kette (10) geführt werden, die in Nuten der Grundplatte (9) gelagert ist, wobei die Lamellen (5) aus den Bolzen der Kette (10) entnehmbar sind oder die Lamellen (5) durch die verschiebbar auf der Grundplatte (9) gelagerten Führungsleisten (12) geführt werden.

13. Die Vorrichtung zur Behandlung von plissiertem Material nach beliebigem Anspruch 10 bis 12 **dadurch gekennzeichnet, dass** die Mechanik (8) das Schraubgetriebe enthält, durch das wenigstens ein mit den Lamellen (5) oder mit der Kette (10) verbundener Mitnehmer angetrieben wird, vorteilhaft hat das Schraubgetriebe eine Stange mit Gewinde versehen und zwar an der Seiten der Stange sind Gewinde mit gegensätzlicher Steigung geschnitten.

14. Die Vorrichtung zur Behandlung von plissiertem Material nach beliebigem Anspruch 10 bis 13 **dadurch gekennzeichnet, dass** die Lamelle (5) durch zwei selbständig geführte Teile (51, 52) in einer Linie gebildet wird, der erste Teil (51) der Lamelle (5) und der zweite Teil (52) der Lamelle (5) sind mit der Mechanik (8) zur gemeinsamen Bewegung bei Änderung des Abstands verbunden.

## Revendications

1. Un procédé de traitement d'un matériau plissé, dans lequel le matériau plissé (1) produit à partir d'un matériau de base flexible ou semi-solide comprend un groupe de plis (2) avec des espaces (3) et des sommets (4), où les plis (2) sont répartis de telle sorte que les espacements entre eux correspondent aux espacements dans le produit final (6), **caractérisé en ce que**
le matériau plissé (1), lorsqu'il est dans un état où il est aplati dans une direction de telle sorte que les plis (2) adjacents soient attachés les uns aux autres sans tout espace (3) libre entre les plis (2), est mis en contact avec un système de lamelles (5) guidées parallèlement et orientées dans le sens des plis (2),
les lamelles étant d'abord dans une première position (A) réparties dans les espacements (a) correspondant aux distances entre les sommets (4) et les plis (2) aplatis,
lors du mouvement relatif entre les lamelles (5) et le matériau plissé (1), les lamelles (5) pénètrent dans le matériau plissé (1) entre les sommets (4) des plis (2) de telle sorte qu'elles atteignent au moins partiellement l'intérieur du matériau plissé (1),
et ensuite les lamelles (5) se déplient dans une deuxième position (B), dans laquelle elles portent les plis (2) dans des espacements (b) correspondant aux espacements dans le produit final (6).

2. Le procédé de traitement du matériau plissé selon la revendication 1, **caractérisé en ce que** le matériau plissé (1) est aplati dans une direction pour éliminer les espaces (3) entre les plis (2) dans la première phase du traitement du matériau plissé (1) ou dans la dernière phase du processus qui précède le processus de fabrication du matériau plissé (1), après laquelle le matériau plissé (1) est maintenu dans un état aplati, où les lamelles (5) dans la deuxième position (B) sont uniformément espacées ou les espacements entre les lamelles (5) dans la deuxième position (B) étant différents dans les différentes zones du matériau plissé (1).

3. Le procédé de traitement du matériau plissé selon l'une quelconque des revendications 1 ou 2, **caractérisé en ce que** pendant la pénétration des lamelles (5) dans le matériau plissé (1), les lamelles se décalent entre les sommets (4) jusqu'au sommet opposé (41) ; de préférence, les lamelles (5) par leur bord ou au moins par une partie de leur bord touchent le côté intérieur du sommet opposé (41).

4. La méthode de traitement du matériau plissé selon l'une quelconque des revendications 1 à 3, **caractérisé en ce que** le nombre de lamelles (5) pénétrant entre les sommets (4) adjacents correspond au nombre d'espaces (3) initiaux entre les plis (2), ou que le nombre de lamelles (5) pénétrant entre les sommets (4) adjacents correspond à une fraction N/X, où N est le nombre d'espaces initiaux (3) entre les plis (2) et X est le nombre entier, de préférence 2 ou 3 ou 4 ou 5, la lamelle (5) se trouvant, lorsqu'elle vient en contact avec le matériau plissé (1) et pénètre ensuite dans celui-ci, entre chaque X-ième paire adjacente des plis (2).

5. Le procédé de traitement du matériau plissé selon l'une quelconque des revendications 1 à 4, **caractérisé en ce que** l'aplatissement du matériau plissé (1) est rêlaché pendant la pénétration des lamelles (5), de préférence est rêlaché une fois que les lamelles (5) s'enfoncent dans les rainures (7) formées par les sommets (4) arrondis des plis (2) adjacents dans un état aplati du matériau plissé (1).

6. Le procédé de traitement du matériau plissé selon l'une quelconque des revendications 1 à 5, **caractérisé en ce que** l'espace entre les lamelles (5) dans la première position (A) correspond au double de l'épaisseur du matériau de base ou à X fois le double de l'épaisseur du matériau de base dans le cas où la lamelle (5) ne s'enfonce que dans chaque X-ième paire adjacente des plis (2).

7. Le procédé de traitement du matériau plissé selon l'une quelconque des revendications 1 à 6, **caractérisé en ce que** les lamelles (5) se déplient uniformément et en même temps pendant le passage de la première position (A) à la deuxième position (B), ou que les lamelles (5) se déplient progressivement les unes après les autres pendant le passage de la première position (A) à la deuxième position (B).

8. Le procédé de traitement du matériau plissé selon l'une quelconque des revendications 1 à 7, **caractérisé en ce que** les lamelles (5) pénètrent dans le matériau plissé (1) progressivement ; tout d'abord, une partie centrale du matériau plissé (1) est insérée entre les lamelles (5) et ensuite le mouvement d'insertion continue de la partie centrale vers les deux côtés.

9. Le procédé de traitement du matériau plissé selon l'une quelconque des revendications 1 à 8, **caractérisé en ce que** les plis (2) dans la deuxième position (B) sont fixés au moins sur une paroi latérale du matériau plissé (1), de préférence, les plis (2) dans la deuxième position (B) étant reliés sur la paroi latérale du matériau plissé (1) par un élément de stabilisation sous forme d'une bande ou d'un profil qui est collé sur la paroi latérale du matériau plissé (1).

10. Un dispositif pour un traitement d'un matériau plissé comprennant une plaque de base (9) avec un système de lamelles parallèles (5) destinées à s'enfoncer entre des plis (2) du matériau plissé, **caractérisé en ce que**
les lamelles (5) sont placées de manière mobile sur la plaque de base (9) afin d'atteindre deux positions (A, B) avec des espacements différents (a, b) des lamelles (5),
les lamelles (5) étant parallèles dans les deux positions (A, B),
ce dispositif comprennant un mécanisme (8) pour le déplacement des lamelles (5) entre la première position (A) et la deuxième position (B),
où la deuxième position (B) des lamelles (5) correspond à la position des plis (2) du matériau plissé (1) dans un produit final (6).

11. Le dispositif pour le traitement d'un matériau plissé selon la revendication 10, **caractérisé en ce que** la lamelle (5) est constituée d'une petite plaque plate ayant sur sa crête inférieure au moins un élément de liaison avec un guidage mobile dans la plaque de base (9) et sur sa crête supérieure possède un arrondi et/ou un rétrécissement en pointe, et l'épaisseur de la lamelle (5) peut atteindre 3 mm, de préférence jusqu'à 2 mm.

12. Le dispositif pour le traitement d'un matériau plissé selon l'une quelconque des revendications 10 à 11, **caractérisé en ce que** les lamelles (5) sont guidées dans des goujons (11) d'une chaîne (10) qui est placée dans des rainures de la plaque de base (9), les lamelles (5) pouvant être retirées des goujons (11) de la chaîne (10), ou les lamelles (5) sont guidées dans des glissières (12) qui sont placées de manière coulissante dans la plaque de base (9).

13. Le dispositif pour le traitement d'un matériau plissé selon l'une quelconque des revendications 10 à 12, **caractérisé en ce que** le mécanisme (8) comprend un engrenage à vis qui actionne au moins un élément d'entraînement relié aux lamelles (5) et/ou à la chaîne (10) ; de préférence, l'engrenage à vis comporte une tige filetée sur laquelle les filets ont un pas opposé sur chaque côté.

14. Le dispositif pour le traitement d'un matériau plissé selon l'une quelconque des revendications 10 à 13, **caractérisé en ce que** la lamelle (5) est constituée de deux parties (51, 52) quidées séparément sur le même axe ; la première partie (51) de la lamelle (5) et la deuxième partie (52) de la lamelle sont reliées par le mécanisme (8) en un mouvement commun lors de changement d'écartement.
